# EUROPÄISCHE PATENTSCHRIFT

(11) **EP 0 418 581 B1**
(45) Veröffentlichungstag und Bekanntmachung des Hinweises auf die Patenterteilung: **10.11.1993**
(21) Anmeldenummer: 90116131.5
(22) Anmeldetag: 23.08.1990
(51) Int. Cl.: B60P 3/22, B60P 1/60

(54) **Sauglader für schüttfähiges und flüssiges Ladegut**
Sucking loader for pourable and liquid materials
Dispositif de chargement par aspiration pour matières en vrac et liquides

(30) Priorität: 20.09.1989 DE 3931334
(43) Veröffentlichungstag der Anmeldung: 27.03.1991
(73) Patentinhaber: PUTZMEISTER-WERK MASCHINENFABRIK GMBH, 72631 Aichtal (DE)
(72) Erfinder: Alwes, Dieter, D-7447 Aichtal 2 (DE); Schillinger, Hans-Dieter, D-7303 Neuhausen (DE)
(74) Vertreter: Wolf, Eckhard, Dr.-Ing.

(56) Entgegenhaltungen:
- US-A- 2 116 603
- US-A- 3 070 243

## Beschreibung

Die Erfindung betrifft einen Sauglader für schüttfähiges oder flüssiges Ladegut, mit einem auf einem Fahrgestell angeordneten Sammelbehälter für das Ladegut, einer an einem Sauganschluß des Sammelbehälters anschließbaren Saugleitung und einer an einem Blasanschluß des Sammelbehälters anschließbaren Blasleitung.

Sauglader dieser Art werden insbesondere zum Ansaugen, Transportieren und Verblasen von Flüssigkeiten sowie von schüttfähigem Ladegut eingesetzt, welches aufgrund seiner Kornverteilung nicht pumpfähig ist. Zum Ansaugen des Ladeguts weisen bekannte Sauglader einen mit Unterdruck beaufschlagbaren Sammelbehälter sowie einen auf einem Schwenkarm geführten, mit einem Sauganschluß des Sammelbehälters verbundenen Saugschlauch auf. Das Entleeren des mit Ladegut gefüllten Sammelbehälters erfolgt dort über eine Entleerungsklappe an der Rückwand des kippbar auf dem Fahrgestell angeordneten Sammelbehälters oder über eine am tiefsten Punkt des gekippten Sammelbehälters angeschlossene, mit Druckluft beaufschlagbare Blasleitung. Die vom Saugschlauch unabhängige Blasleitung wird in der Regel in einzelne Rohrstücke zerlegt auf dem Sauglader mitgeführt und beim Verblasen von Ladegut an wechselnden Einsatzorten oder über kürzere Entfernungen vor und nach jedem Blasvorgang verlegt bzw. demontiert. Beim Verblasen größerer Mengen Ladegut an einem Einsatzort hingegen wird sie stationär verlegt und zum Verblasen an den Blasanschluß des Saug laders angeschlossen bzw. anschließend wieder von diesem getrennt. Insbesondere das Verblasen kleinerer Mengen Ladegut über größere Entfernungen an unterschiedlichen Einsatzorten erfordert entweder den Einsatz einer Vielzahl stationärer Blasleitungen oder das zeit- und arbeitsaufwendige manuelle Verlegen bzw. Demontieren der Blasleitung vor und nach jedem Blasvorgang. Weiter wird bei den bekannten Saugladern die relativ geringe Reichweite des Saugschlauchs als nachteilig empfunden, da bei weiträumig verteiltem Ladegut der Sauglader ständig verfahren und dabei entweder der Ansaugvorgang unterbrochen oder eine weitere Person zur Manipulierung des Saugschlauchs eingesetzt werden muß. Zudem ist auch das vollständige Entleeren von größeren, mit zähflüssigem, nicht nachfließendam Schlamm gefüllten Klärbecken, -teichen oder dergleichen nicht möglich, da dort der Sauglader nicht auf dem Ladegut verfahren werden kann.

Der Erfindung liegt daher die Aufgabe zugrunde, den bekannten Sauglader der eingangs angegebenen Art dahingehend zu verbessern, daß die Saugleitung und die Blasleitung die gleiche Reichweite aufweisen und einfacher handhabbar sind.

Zur Lösung dieser Aufgabe werden die im Kennzeichenteil des Anspruchs 1 angegebenen Merkmale vorgeschlagen. Weitere vorteilhafte Ausgestaltungen und Weiterbildungen der Erfindung ergeben sich aus den abhängigen Ansprüchen.

Der erfindungsgemäßen Lösung liegt vor allem der Gedanke zugrunde, das Ansaugen und Verblasen des Ladeguts mit Hilfe einer einzigen Leitung großer Reichweite durchzuführen. Um dies zu erreichen, wird gemäß der Erfindung eine am Fahrgestell angeordnete, wahlweise an den Sauganschluß oder an den Blasanschluß anschließbare kombinierte Saug- und Blasleitung vorgeschlagen. Da die Saugund Blasanschlüsse in der Regel voneinander entfernt am Sammelbehälter angeordnet sind, ist gemäß einer bevorzugten Ausgestaltung der Erfindung eine am Saug- und/oder am Blasanschluß angeschlossene Kupplungsleitung vorgesehen, deren dem betreffenden Anschluß gegenüberliegendes Ende eine dem anderen Anschluß oder dem Ende der anderen Kupplungsleitung benachbarte Kupplungsöffnung für die kombinierte Saug- und Blasleitung oder für eine am sammelbehälterseitigen Ende der kombinierten Saugund Blasleitung angeschlossene Kupplungsleitung aufweist.

Bei Saugladern mit um eine Horizontalachse nach hinten kippbarem Sammelbehälter wird gemäß einer vorteilhaften Ausgestaltung der Erfindung vorgeschlagen, daß am sammelbehälterseitigen Ende der kombinierten Saug- und Blasleitung eine sich etwa über die halbe Fahrgestellänge nach hinten erstreckende, als Schlauch ausgebildete Kupplungsleitung mit nach hinten weisender Kupplungsöffnung angeschlossen ist, daß an dem am hinteren Ende des Sammelbehälters angeordneten Blasanschluß eine sich etwa über die halbe Fahrgestellänge nach vorne erstreckende, als Schlauch ausgebildete Kupplungsleitung mit nach vorne weisender Kupplungsöffnung angeschlossen ist, daß an dem im oberen Bereich des Sammelbehälters angeordneten Sauganschluß eine in die Nähe der beiden anderen Kupplungsöffnungen nach unten geführte Kupplungsleitung mit nach vorne weisender Kupplungsöffnung angeschlossen ist und daß die Kupplungsöffnung der kombinierten Saugund Blasleitung wahlweise mit einer der saug- oder blasseitigen Kupplungsöffnungen verbindbar ist. Die Kupplungsstelle ist dadurch leicht zugänglich und gewährleistet somit einen schnellen Wechsel der Verbindungen.

Gemäß einer weiteren bevorzugten Ausgestaltung der Erfindung ist zwischen der kombinierten Saug- und Blasleitung oder der mit dem sammelbehälterseitigen Ende der kombinierten Saug- und Blasleitung verbundenen Kupplungsleitung einerseits und dem Sauganschluß und dem Blasanschluß oder deren benachbarten Kupplungsöffnungen andererseits eine Rohrweiche angeordnet. Die Rohrweiche kann als Schieber oder aber als Umsteckweiche ausgebildet sein, bei der die jeweils offene saug- oder blasseitige Kupplungsöffnung mit einem Deckel verschließbar ist.

Um Bewegungen in den vom Sauganschluß bzw. vom Blasanschluß zur Rohrweiche führenden Kupplungsleitungen zu vermeiden, ist die Rohrweiche vorteilhafterweise starr mit dem gegenüber dem Fahrgestell kippbaren Sammelbehälter verbunden. Der Kupplungsschlauch der kombinierten Saug- und Blasleitung sollte dann zweckmäßig in beiden Kupplungsstellungen beim Kippen des Sammelbehälters gegenüber dem Fahrgestell verschwenkbar und/oder verbiegbar sein. Das Verschwenken des Kupplungsschlauchs der kombinierten Saug- und Blasleitung kann um eine an seinem der Kupplungsöffnung gegenüberliegenden Ende angeordnete horizontale Gelenkachse erfolgen.

Eine andere bevorzugte Ausgestaltung der Erfindung sieht vor, daß die Rohrweiche starr mit dem Fahrgestell verbunden ist. Um beim Kippen des Sammelbehälters die Relativbewegung zwischen dem Blasanschluß und dem Sauganschluß bzw. der Rohrweiche auszugleichen sind zweckmäßig die am Blasanschluß angeschlossene Kupplungsleitung und die mit dem Sauganschluß verbundene Kupplungsleitung an ihren der Kupplungsöffnung gegenüberliegenden Enden um eine horizontale Gelenkachse verschwenkbar. Zum Ausgleich der beim Kippen des Sammelbehälters auftretenden Abstandsveränderung zwischen Saug- bzw. Blasanschluß und Rohrweiche können die Kupplungsleitungen zum Saug- bzw. Blasanschluß als flexible Schlauchleitungen ausgebildet werden.

Um ein Durchhängen der gegebenenfalls mit Ladegut gefüllten Kupplungsschläuche zu vermeiden, ist zweckmäßig der Kupplungsschlauch der kombinierten Saug- und Blasleitung ebenso wie der am Blasanschluß angeschlossene Kupplungsschlauch auf einem, vorzugsweise als Rinne ausgebildeten, fahrgestellfesten Lagerbock aufgelegt.

Um die Handhabung der kombinierten Saug- und Blasleitung zu vereinfachen und deren Reichweite zu vergrößern ist gemäß einer weiteren bevorzugten Ausgestaltung der Erfindung ein um eine vertikale Achse am Fahrgestell drehbar angeordneter, aus mehreren um horizontale Achsen gegeneinander verschwenkbaren Auslegern zusammengesetzter, die kombinierte Saug- und Blasleitung tragender Knickverteilermast vorgesehen. Um zu vermeiden, daß der Knickverteilermast während des Transportes nach oben oder zur Seite über das Fahrgestell hinausragt sind die Ausleger des zusammengefalteten Knickverteilermasts vorteilhafterweise im wesentlichen parallel zueinander oberhalb und/oder seitlich des Sammelbehälters angeordnet. Das Kippen des Sammelbehälters gegenüber dem Fahrgestell wird zweckmäßig dadurch ermöglicht, daß der Knickverteilermast aus dem Kippbereich des Sammelbehälters herausschwenkbar ist.

Um beim Auseinander- bzw. Zusammenfalten des Knickverteilermasts Verwindungen in der kombinierten Saug- und Blasleitung zu verhindern, kann die im wesentlichen im Abstand und parallel zu den Auslegern geführte kombinierte Saug- und Blasleitung im Bereich der Knickgelenke des Knickverteilermasts gelenkig miteinander verbundene Rohrbögen oder als Schlauchleitung ausgebildete Abschnitte aufweisen, wobei die Schlauchleitungsabschnitte paarweise durch ein mit dem Knickverteilermast verbundenes Rohrgelenk mit zwei fluchtenden, um eine zur Schwenkachse parallele Achse gegeneinander verdrehbaren Anschlüssen miteinander verbunden sind. Um den Verschleiß der gegenüber metallischen Rohrbögen verschleißfesteren gekrümmten Schlauchleitungsabschnitte weiter zu verringern ist der Radius der Krümmungen zweckmäßig größer als der Abstand zwischen der kombinierten Saug- und Blasleitung und dem Ausleger im Bereich der Parallelführung.

Im folgenden wird die Erfindung anhand eines in der Zeichnung in schematischer Weise dargestellten Ausführungsbeispiels näher erläutert. Es zeigen
Fig. 1 eine Seitenansicht eines Saugladers mit Knickverteilermast und kombinierter Saug- und Blasleitung;
Fig. 2 eine Draufsicht auf den Sauglader nach Fig. 1.

Der in der Zeichnung dargestellte Sauglader 10 besteht im wesentlichen aus einem Fahrgestell 12, einem auf dem Fahrgestell 12 um eine Horizontalachse 14 kippbaren, mit Unterdruck beaufschlagbaren Sammelbehälter 16, sowie einer an einem Knickverteilermast 18 angeordneten kombinierten Saug- und Blasleitung 20, die wahlweise mit einem Sauganschluß 22 oder einem Blasanschluß 24 des Sammelbehälters 16 verbindbar ist.

Auf dem Fahrgestell 12 ist weiter ein nicht dargestellter kombinierter Vakuum-Drucklufterzeuger angeordnet, der zum Ansaugen von Ladegut saugseitig mit dem Sammelbehälter 16 und zum Verblasen von Ladegut druckseitig mit dem Blasanschluß 24 und dem Sammelbehälter 16 verbunden werden kann.

Der Sauganschluß 22 befindet sich im oberen Bereich des Sammelbehälters 16, während der Blasanschluß 24 im unteren Bereich der Sammelbehälterrückwand angeordnet ist. Beim Ansaugen kann so das angesaugte Ladegut nach Eintritt in den Sammelbehälter 16 nach unten fallen, während es beim Verblasen im gekippten Sammelbehälter 16 selbsttätig zum Blasanschluß 24 gelangt und dort in den vom Drucklufterzeuger zugeführten Druckluftstrom eingespeist wird.

Sowohl am Sauganschluß 22 als auch am Blasanschluß 24 sind Kupplungsleitungen 26,28 angeschlossen, die vom jeweiligen Anschluß 22,24 aus zu einer leicht zugänglichen Kupplungsstelle 30 in der Mitte des Fahrgestells 12 führt. Beide Kupplungsleitungen 26,28 enden dort mit nach vorne weisenden Kupplungsöffnungen 32 bzw. 32', von denen jeweils eine mittels einer Schnellkupplung 34 mit der nach hinten weisenden Kupplungsöffnung 32'' eines am sammelbehälterseitigen Ende der kombinierten Saug- und Blasleitung 20 angeschlossenen Kupplungsschlauchs 36 verbunden werden kann. Die jeweils andere Kupplungsöffnung ist mit einem Deckel verschließbar. Beide Kupplungsleitungen 26,28 sind am Sauganschluß 22 bzw. am Blasanschluß 24 mittels eines um eine horizontale Gelenkachse verschwenkbaren Rohrbogens 38,40 angeschlossen. Während die am Sauganschluß 22 angeschlossene Kupplungsleitung 26 nach unten gerichtet ist und aus Stahlrohren besteht ist die mit dem Blasanschluß 24 verbundene Kupplungsleitung 28 als Schlauchleitung ausgebildet und in einer Rinne 42 eines fahrgestellfesten Lagerbocks 44 geführt.

Der wahlweise mit der Kupplungsleitung 26 oder 28 verbindbare Kupplungsschlauch 36 ist von der Kupplungsstelle 30 aus in einer fahrgestellfesten Rinne 45 am Sammelbehälter 16 entlang nach vorne zum Fuß des Knickverteilermasts 18 geführt, wo er über einen um eine horizontale Gelenkachse verschwenkbaren Rohrbogen 46 mit dem sammelbehälterseitigen Ende der kombinierten Saug- und Blasleitung 20 verbunden ist.

Die kombinierte Saug- und Blasleitung führt von dort über eine Drehdurchführung 48 durch den Drehlagerbock 50 des Knickverteilermasts 18 nach oben zu dessen Grundgelenk 52 und tritt dort durch einen Rohrbogen 54 aus, der um die horizontale Knickachse des Grundgelenks 52 verschwenkbar ist. Zwischen dem Grundgelenk 52 und dem ersten Knickgelenk 53 des Knickverteilermasts 18 sowie zwischen dem ersten Knickgelenk 53 und dem zweiten Knickgelenk 56 ist die kombinierte Saug-und Blasleitung als Schlauchleitung ausgebildet und an Halterungen 58 im Abstand vom Grundausleger 60 bzw. vom ersten Ausleger 62 geführt. Im Bereich der Knickgelenke 53 bzw. 56 weist die kombinierte Saug- und Blasleitung 20 jeweils zwei gelenkig miteinander verbundene Rohrbögen 64,66 auf, die um eine zur Knickachse der Ausleger 60,62,72 parallele Achse gegeneinander verdrehbar sind. Das am Rohrbogen 66 des zweiten Knickgelenks 56 angeschlossene, als Schlauchleitung ausgebildete Endstück 68 der kombinierten Saug- und Blasleitung 20 ist in einer Rinne 70 des letzten Auslegers 72 geführt und über das Ende des letzten Auslegers hinaus verlängert.

Das vierachsige, mit einer Fahrerkabine 74 versehene Fahrgestell 12 des Saugladers 10 weist vier Stützbeine 80,80' mit hydraulisch teleskopierbaren Stützfüßen 82,82' auf. Während die vorderen Stützbeine 80 im Tragrahmen 84 des Drehlagerbocks 50 um vertikale Achsen 86 nach vorne und außen schwenkbar gelagert sind, können die hinteren Stützbeine 80' in Rohrführungen 88 quer zur Saugladerlängsachse seitlich nach außen verschoben werden. Alternativ dazu können auch alle vier Stützbeine seitlich nach außen teleskopierbar ausgebildet sein.

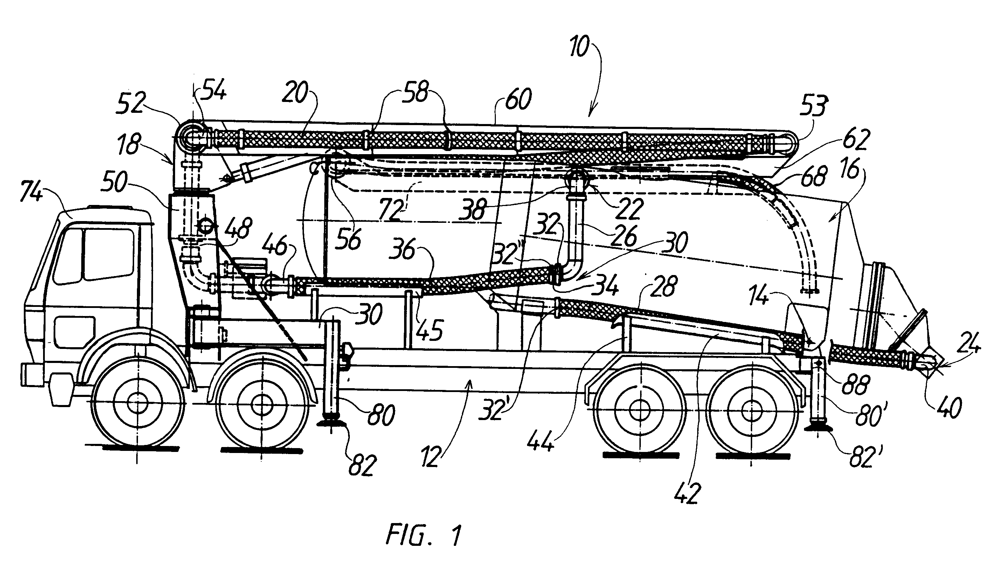

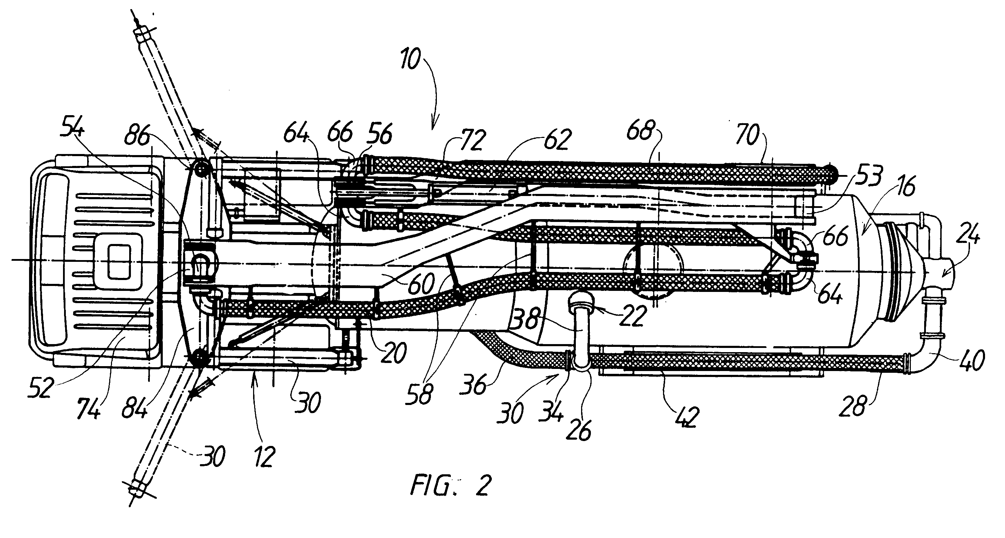

Zum Verfahren des Saugladers 10 wird der Knickverteilermast 18 zusammengefaltet (Fig. 1 und 2), so daß die Ausleger des gefalteten Knickverteilermasts 18 im wesentlichen parallel zueinander oberhalb und seitlich des Sammelbehälters 16 angeordnet sind. Zum Ansaugen von Ladegut wird der Knickverteilermast nach Erreichen des Einsatzortes so aufgerichtet, daß sich das Ansaugende der kombinierten Saug- und Blasleitung 20 im oder unmittelbar über dem Ladegut befindet. Die Kupplungsöffnungen des Kupplungsschlauchs 36 und der Kupplungsleitung 26 werden durch die Schnellkupplung 34 miteinander verbunden und der Sammelbehälter 16 mit Unterdruck beaufschlagt.

Nach dem Auffüllen des Sammelbehälters 16 kann der Knickverteilermast 18 in die Transportstellung zusammengefaltet und der Sauglader 10 dorthin verfahren werden, wo das Ladegut verblasen werden soll. Dort wird die mit einem Deckel verschlossene Kupplungsöffnung 32 der Schlauchleitung 28 geöffnet und mit Hilfe der Schnellkupplung 34 mit der Kupplungsöffnung 32'' des Kupplungsschlauch 36 verbunden. Anschließend wird die Kupplungsöffnung 32' der Kuppplungsleitung 26 mit dem Deckel verschlossen und der Blasanschluß 24 des Sammelbehälters 16 mit Druckluft beaufschlagt.

## Patentansprüche

1. Sauglader für schüttfähiges oder flüssiges Ladegut, mit einem auf einem Fahrgestell (12) angeordneten Sammelbehälter (16) für das Ladegut, einer an einem Sauganschluß (22) des Sammelbehälters (16) anschließaren Saugleitung und einer an einem Blasanschluß (24) des Sammelbehälters (16) anschließbaren Blasleitung, **gekennzeichnet** **durch** eine am Fahrgestell (12) angeordnete, wahlweise an den Sauganschluß (22) oder an den Blasanschluß (24) anschließbare kombinierte Saug- und Blasleitung (20).

2. Sauglader nach Anspruch 1, bei welchem die Saugund Blasanschlüsse (22,24) entfernt voneinander am Sammelbehälter angeordnet sind, **gekennzeichnet durch** eine am Saug- und/oder am Blasanschluß (22 bzw. 24) angeschlossene Kupplungsleitung (26 bzw. 28), deren dem betreffenden Anschluß (24 bzw. 22) gegenüberliegendes Ende eine dem anderen Anschluß oder dem Ende der anderen Kupplungsleitung (28 bzw. 26) benachbarte Kupplungsöffnung (32,32') für die kombinierte Saug- und Blasleitung (20) oder für eine am sammelbehälterseitigen Ende der kombinierten Saug- und Blasleitung (20) angeschlossene Kupplungsleitung (36) aufweist.

3. Sauglader nach Anspruch 1 oder 2, dessen Sammelbehälter (16) um eine Horizontalachse nach hinten kippbar ist, **dadurch gekennzeichnet,** daß am sammelbehälterseitigen Ende der kombinierten Saug- und Blasleitung (20) eine sich etwa über die halbe Fahrgestelllänge nach hinten erstreckende, als Schlauch ausgebildete Kupplungsleitung (36) mit nach hinten weisender Kupplungsöffnung (32'') angeschlossen ist, daß an dem am hinteren Ende des Sammelbehälters (16) angeordneten Blasanschluß (24) eine sich etwa über die halbe Fahrgestellänge nach vorne erstreckende, als Schlauch ausgebildete Kupplungsleitung (28) mit nach vorne weisender Kupplungsöffnung (32') angeschlossen ist, daß an dem im oberen Bereich des Sammelbehälters (16) angeordneten Sauganschluß (22) eine in die Nähe der beiden anderen Kupplungsöffnungen (32' ,32'') nach unten geführte Kupplungsleitung (26) mit nach vorne weisender Kupplungsöffnung (32) angeschlossen ist und daß die Kupplungsöffnung (32'') der kombinierten Saugund Blasleitung (20) wahlweise mit einer der saug- oder blasseitigen Kupplungsöffnungen (32,32') verbindbar ist.

4. Sauglader nach einem der Ansprüche 1 bis 3, **dadurch gekennzeichnet,** daß zwischen der kombinierten Saugund Blasleitung oder der mit dem sammelbehälterseitigen Ende der kombinierten Saug- und Blasleitung verbundenen Kupplungsleitung einerseits und dem Sauganschluß und dem Blasanschluß oder deren einander benachbarten Kupplungsöffnungen andererseits eine Rohrweiche angeordnet ist.

5. Sauglader nach Anspruch 4, **dadurch gekennzeichnet,** daß die Rohrweiche als Umsteckweiche ausgebildet ist.

6. Sauglader nach Anspruch 5, **dadurch gekennzeichnet,** daß die jeweils offene saug- oder blasseitige Kupplungsöffnung (32,32') mit einem Deckel verschließbar ist.

7. Sauglader nach Anspruch 4, **dadurch gekennzeichnet,** daß die Rohrweiche als Schieber ausgebildet ist.

8. Sauglader nach einem der Ansprüche 4 bis 7, **dadurch gekennzeichnet**, daß die Rohrweiche starr mit dem gegenüber dem Fahrgestell (12) kippbaren Sammelbehälter (16) verbunden ist.

9. Sauglader nach einem der Ansprüche 3 bis 8, **dadurch gekennzeichnet**, daß der Kupplungsschlauch (36) der kombinierten Saug- und Blasleitung (20) in beiden Kupplungsstellungen beim Kippen des Sammelbehälters (16) gegenüber dem Fahrgestell (12) verschwenkbar und/oder verbiegbar ist.

10. Sauglader nach einem der Ansprüche 3 bis 9, **dadurch gekennzeichnet**, daß der Kupplungsschlauch (36) der kombinierten Saug- und Blasleitung (20) an seinem der Kupplungsöffnung (32'') gegenüberliegenden Ende um eine horizontale Gelenkachse verschwenkbar ist.

11. Sauglader nach einem der Ansprüche 4 bis 7, **dadurch gekennzeichnet**, daß die Rohrweiche starr mit dem Fahrgestell verbunden ist.

12. Sauglader nach einem der Ansprüche 3 bis 11, **dadurch gekennzeichnet**, daß der am Blasanschluß (24) angeschlossene Kupplungsschlauch (28) an seinem der Kupplungsöffnung (32') gegenüberliegenden Ende um eine horizontale Gelenkachse verschwenkbar ist.

13. Sauglader nach einem der Ansprüche 2 bis 12, **dadurch gekennzeichnet**, daß die mit dem Sauganschluß (22) verbundene Kupplungsleitung (26) an ihrem der Kupplungsöffnung (32) gegenüberliegenden Ende um eine horizontale Gelenkachse verschwenkbar ist.

14. Sauglader nach einem der Ansprüche 3 bis 13, **dadurch gekennzeichnet**, daß der Kupplungsschlauch (36) der kombinierten Saug- und Blasleitung (20) auf einem, vorzugsweise als Rinne (45) ausgebildeten, fahrgestellfesten Lagerbock aufliegt.

15. Sauglader nach einem der Ansprüche 3 bis 14, **dadurch gekennzeichnet**, daß der am Blasanschluß (24) angeschlossene Kupplungsschlauch (28) auf einem, vorzugsweise als Rinne (42) ausgebildeten, fahrgestellfesten Lagerbock (44) aufliegt.

16. Sauglader nach einem der Ansprüche 1 bis 15, **gekennzeichnet durch** einen um eine vertikale Achse am Fahrgestell (12) drehbar angeordneten, aus mehreren um horizontale Achsen gegeneinander verschwenkbaren Auslegern (60,62,72) zusammengesetzten, die kombinierte Saug- und Blasleitung (20) tragenden Knickverteilermast (18).

17. Sauglader nach Anspruch 16, **dadurch gekennzeichnet,** daß die Ausleger (60,62,72) des zusammengefaltenen Knickverteilermasts (18) im wesentlichen parallel zueinander oberhalb und/oder seitlich des Sammelbehälters (16) angeordnet sind.

18. Sauglader nach Anspruch 16 oder 17, **dadurch gekennzeichnet,** daß der Knickverteilermast (18) aus dem Kippbereich des gegenüber dem Fahrgestell (12) kippbaren Sammelbehälters (16) herausschwenkbar ist.

19. Sauglader nach einem der Ansprüche 16 bis 18, **dadurch gekennzeichnet,** daß die im wesentlichen parallel zu den Auslegern (60,62,72) geführte kombinierte Saug- und Blasleitung (20) im Bereich der Knickgelenke (53,56) des Knickverteilermasts (18) gelenkig miteinander verbundene Rohrbögen (64,66) aufweist.

20. Sauglader nach einem der Ansprüche 16 bis 18, **dadurch gekennzeichnet,** daß die im Abstand und im wesentlichen parallel zu den Auslegern (60,62,72) geführte kombinierte Saug-und Blasleitung (20) mindestens im Bereich der Knickgelenke (53,56) des Knickverteilermasts (18) als Schlauchleitung ausgebildete Abschnitte aufweist, die jeweils paarweise durch ein mit dem Knickverteilermast verbundenes Rohrgelenk mit zwei miteinander fluchtenden, um eine zur Schwenkachse parallele Achse gegeneinander verdrehbaren Anschlüssen miteinander verbunden sind.

21. Sauglader nach Anspruch 20, **dadurch gekennzeichnet,** daß die Schlauchleitungsabschnitte gekrümmt ausgebildet sind und daß der Krümmungsradius größer als der Abstand zwischen der kombinierten Saug- und Blasleitung und dem Ausleger im Bereich der Parallelführung ist.

22. Sauglader nach einem der Ansprüche 16 bis 21, **dadurch gekennzeichnet,** daß das Ansaugende der kombinierten Saug- und Blasleitung als Schlauchleitung (68) ausgebildet und über das Ende des letzten Auslegers (72) hinaus verlängert ist.

23. Sauglader nach einem der Ansprüche 1 bis 22, **dadurch gekennzeichnet,** daß der Sammelbehälter (16) eine verschließbare Entleerungsklappe aufweist.

## Claims

1. Suction loader for pourable or liquid material, having a collecting vessel (16) for the material disposed on a chassis (12), a suction line connectable to a suction connection (22) of the collecting vessel (16), and a blast line connectable to a blast connection (24) of the collecting vessel (16), **characterized by** a combined suction and blast line (20) which is disposed on the chassis (12) and is connectable selectively to the suction connection (22) or the blast connection (24).

2. Suction loader according to claim 1, wherein the suction and blast connections (22, 24) are disposed remote from one another on the collecting vessel, **characterized by** a coupling line (26 and/or 28) which is connected to the suction and/or blast connection (22 and/or 24) and whose end remote from the connection in question (24 and/or 22) has, adjacent to the other connection or the end of the other coupling line (28 and/or 26), a coupling opening (32, 32') for the combined suction and blast line (20) or for a coupling line (36) connected to the collecting-vessel end of the combined suction and blast line (20).

3. Suction loader according to claim 1 or 2, whose collecting vessel (16) may be tilted backwards about a horizontal axis, **characterized in that** connected to the collecting-vessel end of the combined suction and blast line (20) is a coupling line (36) in the form of a tube which extends backwards approximately over half the chassis length and has a backward directed coupling opening (32''), that connected to the blast connection (24) disposed at the back end of the collecting vessel (16) is a coupling line (28) in the form of a tube which extends forwards approximately over half the chassis length and has a forward directed coupling opening (32'), that connected to the suction connection (22) disposed in the top region of the collecting vessel (16) is a coupling line (26) which is led downwards into the vicinity of the other two coupling openings (32', 32'') and has a forward directed coupling opening (32), and that the coupling opening (32'') of the combined suction and blast line (20) is selectively connectable to one of the suction-end or blast-end coupling openings (32, 32').

4. Suction loader according to one of claims 1 to 3, **characterized in that** a tube switch is disposed between the combined suction and blast line or the coupling line connected to the collecting-vessel end of the combined suction and blast line, on the one hand, and the suction connection and the blast connection or their adjacent coupling openings, on the other hand.

5. Suction loader according to claim 4, **characterized in** **that** the tube switch takes the form of an interchangeable switch.

6. Suction loader according to claim 5, **characterized in** **that** in each case the open suction-end or blast-end coupling opening (32, 32') is closable by a cover.

7. Suction loader according to claim 4, **characterized in** **that** the tube switch takes the form of a slide.

8. Suction loader according to one of claims 4 to 7, **characterized in that** the tube switch is rigidly connected to the collecting vessel (16), which is tiltable relative to the chassis (12).

9. Suction loader according to one of claims 3 to 8, **characterized in that** the coupling tube (36) of the combined suction and blast line (20) in both coupling positions may swivel and/or bend relative to the chassis (12) upon tilting of the collecting vessel (16).

10. Suction loader according to one of claims 3 to 9, **characterized in that** the coupling tube (36) of the combined suction and blast line (20) at its end remote from the coupling opening (32'') may swivel about a horizontal hinge axis.

11. Suction loader according to one of claims 4 to 7, **characterized in that** the tube switch is rigidly connected to the chassis.

12. Suction loader according to one of claims 3 to 11, **characterized in that** the coupling tube (28) connected to the blast connection (24) at its end remote from the coupling opening (32') may swivel about a horizontal hinge axis.

13. Suction loader according to one of claims 2 to 12, **characterized in that** the coupling line (26) connected to the suction connection (22) at its end remote from the coupling opening (32) may swivel about a horizontal hinge axis.

14. Suction loader according to one of claims 3 to 13, **characterized in that** the coupling tube (36) of the combined suction and blast line (20) rests on a chassis-fixed bearing block which preferably takes the form of a channel (45).

15. Suction loader according to one of claims 3 to 14, **characterized in that** the coupling tube (28) connected to the blast connection (24) rests on a chassis-fixed bearing block (44) which preferably takes the form of a channel (42).

16. Suction loader according to one of claims 1 to 15, **characterized by** an articulated distribution pole (18) which is disposed on the chassis (12) so as to be rotatable about a vertical axis, is composed of a plurality of jibs (60, 62, 72) capable of swivelling towards one another about horizontal axes and carries the combined suction and blast line (20).

17. Suction loader according to claim 16, **characterized in** **that** the jibs (60, 62, 72) of the collapsed articulated distribution pole (18) are disposed substantially parallel to one another above and/or laterally of the collecting vessel (16).

18. Suction loader according to claim 16 or 17, **characterized** **in that** the articulated distribution pole (18) may be swivelled out of the tilting range of the collecting vessel (16) which is tiltable relative to the chassis (12).

19. Suction loader according to one of claims 16 to 18, **characterized in that** the combined suction and blast line (20) extending substantially parallel to the jibs (60, 62, 72) has, in the region of the articulation joints (53, 56) of the articulated distribution pole (18), tube bends (64, 66) which are hinge-connected to one another.

20. Suction loader according to one of claims 16 to 18, **characterized in that** the combined suction and blast line (20) extending at a distance from and substantially parallel to the jibs (60, 62, 72) has, at least in the region of the articulation joints (53, 56) of the articulated distribution pole (18), portions in the form of tubular line, which are each connected in pairs to one another by a pipe joint which is connected to the articulated distribution pole and has two connections, which are flush with one another and are rotatable towards one another about an axis parallel to the swivel axis.

21. Suction loader according to claim 20, **characterized in that** the tubular line portions are of a curved construction and that the radius of curvature is greater than the distance between the combined suction and blast line and the jib in the region of parallel extension.

22. Suction loader according to one of claims 16 to 21, **characterized in that** the intake end of the combined suction and blast line takes the form of a tubular line (68) and is extended beyond the end of the final jib (72).

23. Suction loader according to one of claims 1 to 22, **characterized in that** the collecting vessel (16) has a closable drain valve.

## Revendications

1. Système de chargement par aspiration pour matières en vrac et liquides, comprenant un réservoir collecteur (16) pour les matières monté sur un châssis (12), une conduite d'aspiration pouvant être couplée avec un raccord d'aspiration (22) du réservoir collecteur (16) et une conduite de soufflage pouvant être couplée avec un raccord de soufflage (24) du réservoir collecteur (16), **caractérisé en ce** qu'il comprend une conduite combinée d'aspiration et de soufflage (20) montée sur le châssis (12) et pouvant être couplée, au choix, avec le raccord d'aspiration (22) ou le raccord de soufflage (24).

2. Système de chargement par aspiration selon la revendication 1, dans lequel les raccords d'aspiration et de soufflage (22, 24) sont disposés à distance l'un de l'autre sur le réservoir collecteur, caractérisé en ce qu'il comprend une conduite d'accouplement (26 et respectivement 28) couplée avec le raccord d'aspiration et/ou de soufflage (22 et respectivement 24), dont l'extrémité située en face du raccord considéré (24 et respectivement 22) comporte au voisinage de l'autre raccord ou de l'extrémité de l'autre conduite d'accouplement (28 et respectivement 26) une ouverture d'accouplement (32, 32') pour la conduite combinée d'aspiration et de soufflage (20) ou pour une conduite d'accouplement (36) raccordée à l'extrémité côté réservoir collecteur de la conduite combinée d'aspiration et de soufflage (20).

3. Système de chargement par aspiration selon l'une des revendications 1 ou 2 dont le réservoir collecteur (16) peut basculer vers l'arrière autour d'un axe horizontal, caractérisé en ce qu'à l'extrémité côté réservoir collecteur de la conduite combinée d'aspiration et de soufflage (20) est raccordée une conduite d'accouplement (36) conformée en tuyau souple s'étendant sur environ la moitié de la longueur du châssis avec une ouverture d'accouplement (32'') dirigée vers l'arrière, qu'avec le raccord de soufflage (24) disposé à l'extrémité postérieure du réservoir collecteur (16) est couplée une conduite d'accouplement (28) conformée en tuyaux souples qui s'étend vers l'avant sur environ la moitié de la longueur du châssis et dont l'ouverture d'accouplement (32') est dirigée vers l'avant, qu'avec le raccord d'aspiration (22) situé dans la partie supérieure du réservoir collecteur (16) est couplée une conduite d'accouplement (26) amenée vers le bas à proximité des deux autres ouvertures d'accouplement (32', 32''), dont l'ouverture d'accouplement (32) est dirigée vers l'avant, et que l'ouverture d'accouplement (32'') de la conduite combinée d'aspiration et de soufflage (20) peut être raccordée, au choix, à l'une des ouvertures d'accouplement 32, 32') située du côté aspiration ou du côté soufflage.

4. Système de chargement par aspiration selon l'une des revendications 1 à 3, caractérisé en ce qu'entre la conduite combinée d'aspiration et de soufflage ou la conduite d'accouplement raccordée à l'extrémité côté réservoir collecteur de la conduite combinée d'aspiration et de soufflage d'une part et le raccord d'aspiration et le raccord de soufflage ou les ouvertures d'accouplement voisines, d'autre part, est disposé un manifold.

5. Système de chargement par aspiration selon la revendication 4, caractérisé en ce que le manifold est conformé en manifold réversible.

6. Système de chargement par aspiration selon la revendication 5, caractérisé en ce que l'ouverture d'accouplement (32, 32') respectivement ouverte du côté aspiration ou du côté soufflage peut être obturée au moyen d'un couvercle.

7. Système de chargement par aspiration selon la revendication 4, caractérisé en ce que le manifold est conformé en tiroir.

8. Système de chargement par aspiration selon l'une des revendications 4 à 7, caractérisé en ce que le manifold est solidarisé avec le réservoir collecteur (16) qui peut basculer par rapport au châssis (12).

9. Système de chargement par aspiration selon l'une des revendications 3 à 8, caractérisé en ce que le tuyau d'accouplement (36) de la conduite combinée d'aspiration et de soufflage (20) peut être pivoté et/ou courbé dans les deux positions d'accouplement lors du basculement du réservoir collecteur (16) par rapport au châssis (12).

10. Système de chargement par aspiration selon l'une des revendications 3 à 9, caractérisé en ce que le tuyau d'accouplement (36) de la conduite combinée d'aspiration et de soufflage (20) peut pivoter avec son extrémité située en face de l'ouverture d'accouplement (32'') autour d'un axe d'articulation horizontal.

11. Système de chargement par aspiration selon l'une des revendications 4 à 7, caractérisé en ce que le manifold est solidaire du châssis.

12. Système de chargement par aspiration selon l'une des revendications 3 à 11, caractérisé en ce que le tuyau d'accouplement (28) couplé avec le raccord de soufflage (24) peut pivoter avec son extrémité située en face de l'ouverture d'accouplement (32') autour d'un axe d'articulation horizontal.

13. Système de chargement par aspiration selon l'une des revendications 2 à 12, caractérisé en ce que la conduite d'accouplement (26) couplée avec le raccord d'aspiration (22) peut pivoter avec son extrémité située en face de l'ouverture d'accouplement (32) autour d'un axe d'articulation horizontal.

14. Système de chargement par aspiration selon l'une des revendications 3 à 13, caractérisé en ce que le tuyau d'accouplement (36) de la conduite combinée d'aspiration et de soufflage (20) repose sur un support solidaire du châssis, de préférence conformé en conduit (45).

15. Système de chargement par aspiration selon l'une des revendications 3 à 14, caractérisé en ce que le tuyau d'accouplement (28) couplé avec le raccord de soufflage (24) repose sur un support (44) solidaire du châssis, de préférence conformé en conduit (42).

16. Système de chargement par aspiration selon l'une des revendications 1 à 15, caractérisé en ce qu'il comprend un mât de distribution articulé (18) disposé de manière à pouvoir tourner autour d'un axe vertical sur le châssis (12), assemblé à partir de plusieurs consoles (60, 62, 72) qui peuvent pivoter les unes par rapport aux autres autour d'axes horizontaux, et portant la conduite combinée d'aspiration et de soufflage (20).

17. Système de chargement par aspiration selon la revendication 16, caractérisé en ce que les consoles (60, 62, 72) du mât de distribution articulé (18) replié sont disposées sensiblement parallèlement les unes aux autres au-dessous et/ ou sur le côté du réservoir collecteur (16).

18. Système de chargement par aspiration selon l'une des revendications 16 ou 17, caractérisé en ce que le mât de distribution articulé (18) peut être pivoté hors de la zone de basculement du réservoir collecteur (16) qui peut pivoter par rapport au châssis (12).

19. Système de chargement par aspiration selon l'une des revendications 16 à 18, caractérisé en ce que la conduite combinée d'aspiration et de soufflage (20) qui s'étend sensiblement parallèlement aux consoles (60, 62, 72) présente dans la région des articulations de coude (53, 56) du mât de distribution articulé (18) des coudes (64, 66) articulés.

20. Système de chargement par aspiration selon l'une des revendications 16 à 18, caractérisé en ce que la conduite combinée d'aspiration et de soufflage (20) qui s'étend à distance et sensiblement parallèlement aux consoles (60, 62, 72), présente au moins dans la région des articulations de coude (53, 56) du mât de distribution articulé (18) des sections conformées en conduites en tuyaux souples qui, par l'intermédiaire d'une articulation de tube solidaire du mât de distribution articulé, sont respectivement couplées par paires avec deux raccords alignés et pouvant tournés l'un par rapport à l'autre autour d'un axe parallèle à l'axe de pivotement.

21. Système de chargement par aspiration selon la revendication 20, caractérisé en ce que les sections de conduite en tuyaux souples peuvent être courbées et que le rayon de courbure est plus grand que la distance entre la conduite combinée d'aspiration et de soufflage et la console dans la région de l'extension parallèle.

22. Système de chargement par aspiration selon l'une des revendications 16 à 21, caractérisé en ce que l'extrémité d'aspiration de la conduite combinée d'aspiration et de soufflage est conformée en conduite en tuyaux souples (68) et prolongée au-delà de l'extrémité de la dernière console (72).

23. Système de chargement par aspiration selon l'une des revendications 1 à 22, caractérisé en ce que le réservoir collecteur (16) comprend un volet d'évacuation obturable.
